# EUROPEAN PATENT SPECIFICATION

(11) **EP 4 377 485 B1**
(45) Date of publication and mention of the grant of the patent: **12.02.2025**
(21) Application number: 22751113.6
(22) Date of filing: 27.07.2022
(51) Int. Cl.: C22B 3/08, C22B 7/00, C22B 3/00, C22B 26/12

(54) **CRYSTALLIZATION PROCESS FOR THE SEPARATION OF METALS**
KRISTALLISIERUNGSVERFAHREN ZUR TRENNUNG VON METALLEN
PROCÉDÉ DE CRISTALLISATION POUR LA SÉPARATION DE MÉTAUX

(30) Priority: 29.07.2021 EP 21188417
(43) Date of publication of application: 05.06.2024
(73) Proprietor: Umicore, 1000 Brussels (BE)
(72) Inventor: VERHEES, Pieter, 2250 Olen (BE)
(86) International application number: PCT/EP2022/071100
(87) International publication number: WO 2023/006826

(56) References cited:
- CN-A- 106 684 489
- CN-A- 109 734 107
- US-B1- 10 995 014
- HU JUNTAO ET AL: "A promising approach for the recovery of high value-added metals from spent lithium-ion batteries", JOURNAL OF POWER SOURCES, ELSEVIER, AMSTERDAM, NL, vol. 351, 29 March 2017 (2017-03-29), pages 192 - 199, XP029972290, ISSN: 0378-7753, DOI: 10.1016/J.JPOWSOUR.2017.03.093

## Description

The present disclosure is related to a crystallization process for the separation of Ni and Li from starting materials, either in aqueous solution or in solid form, comprising these metals.

Ni and Li are currently often present together in several materials, in particular in materials linked to the production or the recycling of rechargeable lithium-ion batteries. Currently prevailing battery chemistries involve cathode powders containing the metals Li, Ni, Mn, and Co (NMC). Other heavily used chemistries make use of cathode powders containing Li, Ni, Co, and Al (NCA), or containing Li, Ni, Co, Mn, and Al (NMCA). In future possible chemistries, Na could replace Li.

There is an increasing need for the recycling of lithium-ion batteries, comprising both production waste and end-of-life batteries. This results in the treatment of complex waste streams, mainly comprising lithium-ion batteries and all their constituents, such as electrode foils, electrolytes, separators, casing material and electronic components, but possibly also comprising amounts of non-lithium batteries, such as nickel-cadmium, nickel-metal-hydride and zinc-based batteries. Derivatives of these production wastes and end-of-life batteries are also available for recycling, in the form of powder fractions such as black mass, which are the result of a mechanical and/or thermal pretreatment.

The chemical complexity of the involved materials increases towards the end of the manufacturing cycle, as more and more components are added to the product. Hence, battery cells and modules may contain a huge number of different elements, for example Ni, Co, Mn, Li, Na, Fe, Al, V, P, F, C, Ti and Mg in the cathode, Li, Ti, Si, C, Al and Cu in the anode, Li, F, P and volatile organic compounds in the electrolyte, and Al, Fe, Cu, Ni, Cr, Sb and plastics with Cl and Br in the casing.

The amount of spent batteries is expected to exceed 100.000 metric tons per year during the coming 10 years, mainly due to the ongoing worldwide electrification of the automotive industry. The battery recycling business is expected to grow accordingly. A commonality of the recycling processes is the need to separate Li from Ni, and optionally from Mn and Co, if present. The separation of Ni, Mn, and Co from each other is on the other hand not always necessary as a compound containing these 3 metals together may form a suitable starting point to produce cathode material for new batteries.

In one traditional battery scrap recycling process described in US2019152797, solvent extraction is used to extract Co and Ni from the purified leach solution containing Ni, Co, Li and others, resulting in a Ni and Co product that is depleted of Li. This operation consumes base such as NaOH or NH₄OH stoichiometrically with the amount of recovered Ni. As a result, a significant operational costs and substantial discharge of salts is endured.

Other processes are based on the crystallization of Ni sulfate from leach solutions, leaving Li in the solution. However, due to the relatively high content of Li in batteries, and hence also in the leach solutions, Li tends to co-crystallize with the Ni. In order to minimize the ensuing loss of Li and the contamination of Ni sulfate, Li is extracted from the solution prior to the crystallization. This is illustrated in CN108439438: calcined lithium-containing battery waste is acid-leached, producing a Li, Co, Ni, Mn, Al, Fe and Cu containing solution, from which first Cu, Fe and Al are removed, after which Li is removed with an extraction agent, followed by crystallization of a mixed Ni, Co, Mn sulfate. A similar process is also known from CN107768763: battery waste is leached in acid, whereupon Cu, Fe and Al are removed from the obtained solution by precipitation. Li is then removed as LiF using hydrogen fluoride, and a mixed Ni, Co, and Mn sulfate is crystallized.

US10995014 teaches processes involving the crystallization of metal sulfates from acidic solution. It deals in particular with the crystallization of NMC (Ni, Mn, Co) from solutions also containing Li. The crystallization is performed by water removal with an endpoint pH of about 1. While a certain selectivity towards Li is obtained, the crystallization liquor still contains a high level of dissolved NMC.

These known processes require an additional Li removal step prior to recovery of Ni sulfate, and optionally also of Co and Mn sulfate. This presents a number of disadvantages. First and foremost, in both processes, reagents are still consumed stoichiometrically with regards to the extracted Li. Also, extraction steps are expensive, because they usually require a costly extraction agent and additional process steps, such as loading the extraction agent with the metal or metals to be removed and stripping the extraction agent. Furthermore, hydrogen fluoride is highly toxic reagent resulting in additional safety investment and operational costs. Also, the introduction of fluorides into the system complicates a later wastewater treatment.

It is therefore an object of the present invention to provide a crystallization process for the recovery of Ni from starting solutions or solids containing Ni and Li, while avoiding the need for a preliminary Li-removal step.

According to a first embodiment, a process is divulged for the selective recovery of transition metals M comprising Ni from starting materials in aqueous solution, said solution also containing Li, comprising the steps of:
- crystallizing Ni by conditioning the solution to reach an acidity A, expressed in g/L of sulfuric acid, at a temperature T, expressed in degrees Celsius, according to the formula A ≥ 1100 - 6.7 * T, with T between 45 °C and the boiling point of the solution, thereby obtaining a mixture of solid and liquid reaction products; and,
- solid/liquid separation of the reaction products, thereby obtaining a solid residue comprising the major part of the Ni entering the process, as a hydrated nickel sulfate, and an effluent solution comprising the major part of the Li entering the process.

By "major part" is meant at least 50% by weight. By "effluent solution" is meant the sum of filtrate and wash water.

A typical source stream is the leachate from an acidic lixiviation process operating on lithium-ion batteries or their derived products. Another example is the purge or bleed of a standard Ni sulfate or NMC sulfate crystallization process. A further example is the purge or bleed of a Cu electrowinning plant. Such bleed streams may indeed contain Ni and Li when lithium-ion batteries are fed to some upstream process step.

According to a second embodiment, a process is divulged for the selective recovery of transition metals M comprising Ni from starting materials in solid form, said solids also containing Li, comprising the steps of:
- crystallizing Ni by contacting the solids with an aqueous media conditioned to reach an acidity A, expressed in g/L of sulfuric acid, at a temperature T, expressed in degrees Celsius, according to the formula A ≥ 1100 - 6.7 * T, with T between 45 °C and the boiling point of the aqueous media, thereby obtaining a mixture of solid and liquid reaction products; and,
- solid/liquid separation of the reaction products, thereby obtaining a solid residue comprising the major part of the Ni entering the process, as a hydrated nickel sulfate, and an effluent solution comprising the major part of the Li entering the process.

A typical source for starting materials in solid form containing Ni and Li is a cathode material bearing scrap or waste, such as black mass, which is a well-known waste stream in lithium-ion battery recycling.

In this second embodiment, a hydrated nickel sulfate precipitate is formed starting from solids instead of starting from a solution. The general inventive concept of the process is, however, the same, no matter if starting from an aqueous solution or a solid. Without being bound by a specific reaction mechanism, it could be assumed that the solids dissolve, and subsequently readily crystallize from the liquid phase.

Both embodiments hinge on the sudden shift in solubility of Ni and Li when reaching high sulfuric acid concentrations and elevated temperatures: the solubility of Ni decreases sharply, while the solubility of Li increases. This allows for the selective crystallization of Ni, i.e., without co-precipitation of Li, even in solutions containing an appreciable concentration of Li. A preliminary Li removal step of Li is thus not necessary in most practical cases.

By "conditioning" the aqueous media or solution is meant that the required temperature is obtained by heating using external means, or by virtue of the dilution enthalpy when highly concentrated sulfuric acid is added. The required acid concentration may be obtained by adding highly concentrated sulfuric acid, or by evaporation of water. Evaporation may advantageously be performed under partial vacuum. The addition of acid and the evaporation of water can be combined. Obviously, evaporating water beyond the solubility limit of Li has to be avoided. A highly acidic Ni- and Li-bearing solution from an upstream process step may be used directly, with little or no additional acidification. Such could be the case when treating solutions from an acidic leach or from electrowinning.

The above formula defines the relationship between acidity and temperature needed to guarantee an adequate selectivity. It has indeed been found that higher crystallization temperatures are advantageous when the acidity is lowered. These conditions indeed promote the formation of lower Ni hydrates, such as Ni sulfate monohydrate, and suppress the formation of higher Ni hydrates, such as Ni sulfate hexahydrate. In combination with the above-defined conditions of acidity and temperature, a low Ni residual solubility is achieved, which leads to low Ni losses in the mother liquor.

A solution temperature below 45 °C is not adequate. A temperature of at least 50 °C is preferred, and a temperature of at least 60 °C is even more preferred. If the needed level of acidity is reached by adding concentrated acid, the dilution enthalpy will typically heat up the solution above the required minimum. The minimum temperature is also useful if the acidity is reached by water evaporation: evaporation is too slow at lower temperatures, unless expensive high-vacuum technology is applied. Independent of the temperature, a solution having at least 500 g/L, or even at least 600 g/L, of sulfuric acid is preferred.

When starting from solids bearing Ni, Mn or Co in a higher oxidation state, it may be opted to add a reducing agent so as to more easily reduce the oxidation state of Ni, Mn and Co to 2. Bivalent cations are indeed soluble, while higher valence cations are only sparingly so.

This will allow the dissolution-crystallization mechanism proposed above to take place. In the absence of a reducing agent, Mn will in particular be prone to form insoluble oxides. This could nevertheless be turned into an advantage if it is desired to separate Mn from Ni and Co: Ni and Co would form a water-soluble hydrated sulfate, while Mn would remain as insoluble oxide.

The step of solid/liquid separation can advantageously be performed at a temperature below 60 °C, even when the crystallization is carried out at a higher temperature. It indeed appears that, once formed, no significant redissolution of the crystallized species occurs. Lower operating temperatures result in less corrosion of the separation equipment. Relevant solid/liquid separation equipment are decanters, centrifuges and all types of filters. This step of solid/liquid separation typically also implies a washing step. Washing can be performed using water.

The Li-bearing effluent, being very acidic, can advantageously be used according to the following illustrative examples:
- as a recycle stream for the acidic lixiviation of lithium-ion batteries or their derived products;
- as a leaching or neutralization agent in operations where lithium-ore such as spodumene is processed;
- as a sulfuric acid source, after separating the acid, e.g. using a sulfuric acid solvent extraction unit or acid purification system; and
- for the recovery of Li, e.g. using solvent displacement.

In a further embodiment according to any preceding one, the acidity A of the solution, expressed in g/L of sulfuric acid, and the temperature T of the solution, expressed in degrees Celsius, are chosen according to the formula A ≥ 1250 - 6.7 * T, with T between 50 °C and the boiling point of the solution. This ensures a lower residual solubility of Ni while further increasing the solubility of Li. The skilled person will easily optimize the operating conditions by maximizing the Ni yield to the hydrated nickel sulfate, while avoiding exceeding the solubility limit of Li.

It should be noted that the above process conditions are also suitable for the separation of Ni and Na. Na indeed tends to precipitate as a double salt with Ni, a problem that can be mitigated or avoided when working in the conditions defined in the present divulgation.

In a further embodiment according to any preceding one, the major part of the Li amounts to at least 80%, or preferably at least 90%, by weight of the Li entering the process.

In a further embodiment according to any preceding one, the major part of the Ni amounts to at least 60%, or preferably at least 80%, by weight of the Ni entering the process. In a further embodiment according to any preceding one, the solid residue obtained in the step of solid/liquid separation comprises hydrated sulfates according to the formula NiSO₄.xH₂O, wherein x is the mean hydration factor, with x < 5, preferably with x < 2.

These features reflect the limited or reduced hydration factor in the residues. Preferably, only low-solubility compounds are formed. This result is obtained by applying the acidity level and temperature constraints featured in any of the above embodiments. Higher acidities and temperatures result in a lower hydration factor. A drying step at 50 °C for 24 hours eliminates most of the free water (moisture) from the residue. As illustrated in the examples, a further heating step at 250 °C results in the formation of nickel sulfate monohydrate (x=1), while heating to 400 °C eliminates most of the hydration water (x=0). The weight loss at 250 °C can thus be used to calculate the hydration factor of the NiSO₄ salt. A dehydration of other metal salts in the residue can also contribute to the measured weight loss at 250 °C and should be taken into account when calculating the hydration factor of NiSO₄.

In a further embodiment according to any preceding one, the starting materials have a Ni:Li weight ratio of at least 0.15. This ratio allows for the crystallization of even low Ni concentrations with yields of at least 60%, while avoiding the undesired precipitation of Li.

The latter embodiments express the preference for obtaining a Ni-rich concentrate. This result is achieved thanks to the formation of lower hydrates such as Ni sulfate monohydrate. This contrasts with the prior art crystallization schemes, which typically lead to the formation of Ni sulfate hexahydrate.

Pure Ni sulfate hexahydrate has a Ni content of 22% by weight, whereas pure Ni sulfate monohydrate has a Ni content of 34% by weight. Depending on the reaction conditions, different Ni hydrate species may be present next to each other. This makes it more difficult in practice to determine the exact amount of Ni sulfate monohydrate. Retrospectively calculated values will be an average over all different hydrate species. The formation of Ni sulfate monohydrate remains, however, beneficial, even if the theoretical maximum value of 34% mentioned above is not reached.

In a further embodiment according to any preceding one, the starting materials further comprise Co. The Co can precipitate together with the Ni, which is advantageous.

Preferably, in such an embodiment the Ni:Co molar ratio is at least 1. This ratio ensures that the solubility of Co is depressed compared to the same solution with less or no Ni. As Co is a most valuable metal, it is important to ensure an excellent yield of Co in the solid residue. The remarkable synergy between Ni and Co has been demonstrated in the Examples.

In a further embodiment according to any preceding one, the total of Ni and Co forms the major part of said transition metals M.

In a further embodiment according to any preceding one, the starting materials further comprise Mn.

In a further embodiment according to any preceding one, the starting materials originate from rechargeable batteries, in particular from lithium-ion batteries. By "originating from rechargeable batteries" are meant liquid or solid products linked to the production or the recycling of secondary lithium-ion batteries or their derived products, such as original or spent rechargeable batteries, production waste, scrap, leaching solutions and black mass. Current rechargeable lithium-ion batteries typically contain Li, Ni, Mn and Co as an intimate mixture. Future rechargeable batteries may have Li replaced by Na. Batteries may contain many other elements, which in a recycling process are considered as unavoidable impurities. The divulged process lends itself for processing such batteries or their scraps, as Li is separated from Ni, Mn and Co. The feature that these 3 metals crystallize together is advantageous, because many processes for the preparation of rechargeable battery precursors involve a starting compound containing precisely these 3 metals. The ratios of the 3 metals can be adjusted before or after precipitation to reach a desired composition.

In a further embodiment according to any preceding one, Ni forms the major part of said transition metals M.

The invention is illustrated in the Examples 1 to 7.

The solubility limits of Li and Ni was investigated in Examples 1 to 3. The results are shown in Figures 1 to 4:
- Figure 1 shows the solubility of Li and Ni as function of acidity at 90 °C;
- Figure 2 shows the solubility of Li and Ni as function of acidity at 50 °C;
- Figure 3 shows the solubility of Li and Co as function of acidity at 80 °C in presence of Ni;
- Figure 4 shows the solubility of Li and Co as function of acidity at 80 °C in absence of Ni (comparative); and,
- Figure 5 shows a TGA of relevant metal hydrates, illustrating the partial dehydration at 250 °C, and the full dehydration at 400 °C.

### Example 1: Ni-Li system as function of H₂SO₄ concentration at 90 °C

Crystallization tests are performed on different solutions prepared according to Table 1.

**Table 1: Solutions comprising Li and Ni**

| Nr. | Ni | Li | H₂SO₄ | Volume |
|---|---|---|---|---|
| | g/L | g/L | g/L | mL |
| 1 | 100 | 25 | 100 | 100 |
| 2 | 100 | 25 | 200 | 100 |
| 3 | 100 | 25 | 300 | 100 |
| 4* | 100 | 25 | 400 | 100 |
| 5* | 100 | 25 | 500 | 100 |

| | | | | |
|---|---|---|---|---|
| *Undissolved metal salts can be present | | | | |

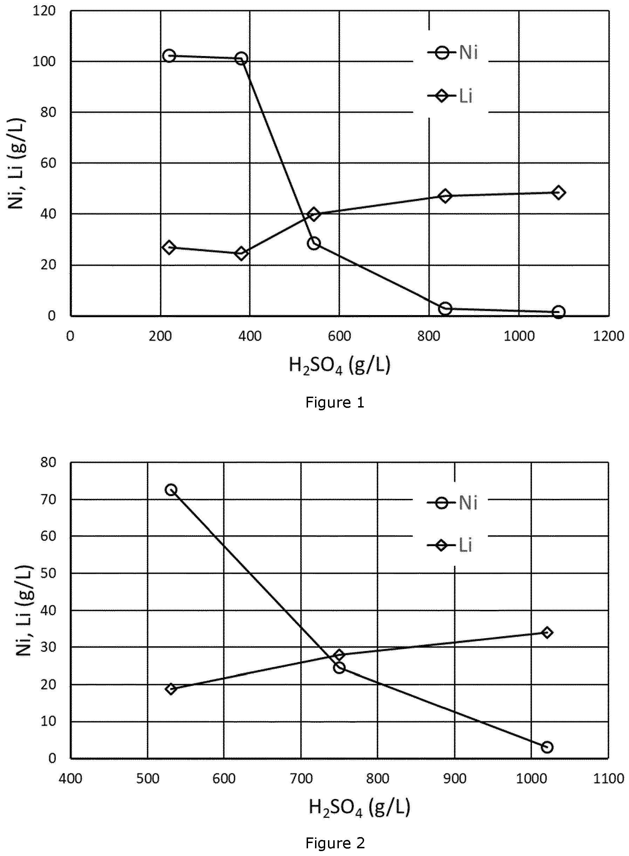

Each solution is agitated and heated to 90 °C. Water is evaporated until the total volume is halved. During this evaporation, Ni and Li become saturated, and crystalize as hydrated NiSO₄ and Li₂SO₄. The slurry is then filtered on a Büchner funnel. The solutions are analyzed for Ni and Li, and the H₂SO₄ concentration is measured by titration. The results are presented in Figure 1.

These crystallization experiments show that the concentration of NiSO₄ drastically drops from above 500 g/L at 90 °C, while the Li₂SO₄ solubility increases. It confirms that a high Ni crystallization yield and selectivity can be obtained.

### Example 2: Ni-Li behavior as function of H₂SO₄ concentration at 50 °C

Crystallization tests are performed on different solutions prepared according to Table 2.

**Table 2: Solutions comprising Li and Ni**

| Nr. | Ni | Li | H₂SO₄ | Volume |
|---|---|---|---|---|
| | g/L | g/L | g/L | mL |
| 6 | 100 | 25 | 300 | 100 |
| 7* | 100 | 25 | 400 | 100 |
| 8* | 100 | 25 | 500 | 100 |

| | | | | |
|---|---|---|---|---|
| *Undissolved metal salts can be present | | | | |

These solutions are treated similarly to those of Example 1. However, a temperature of 50 °C was selected instead of 90 °C. The results are presented in Figure 2.

These crystallization experiments show that a higher acid concentration is required to fully suppress the Ni solubility at 50 °C as compared to 90 °C. At 50°C an acid concentration of at least 750 g/L is preferred to guarantee an excellent Ni yield and selectivity towards Li.

### Example 3: Influence of Ni on the crystallization of Co

Crystallization tests are performed on different solutions prepared according to Tables 3 and 4.

**Table 3: Solutions comprising Li, Ni, and Co**

| Nr. | Co | Ni | Li | H₂SO₄ | Volume |
|---|---|---|---|---|---|
| | g/L | g/L | g/L | g/L | mL |
| 9 | 25 | 75 | 25 | 200 | 100 |
| 10 | 25 | 75 | 25 | 300 | 100 |
| 11* | 25 | 75 | 25 | 400 | 100 |
| 12* | 25 | 75 | 25 | 500 | 100 |

| | | | | | |
|---|---|---|---|---|---|
| *Undissolved metals can be present | | | | | |

**Table 4: Solutions without Ni, comprising Li and Co (comparative)**

| Nr. | Co | Li | H₂SO₄ | Volume |
|---|---|---|---|---|
| | g/L | g/L | g/L | mL |
| 13 | 100 | 25 | 200 | 100 |
| 14 | 100 | 25 | 300 | 100 |
| 15* | 100 | 25 | 400 | 100 |
| 16* | 100 | 25 | 500 | 100 |

| | | | | |
|---|---|---|---|---|
| *Undissolved metals can be present | | | | |

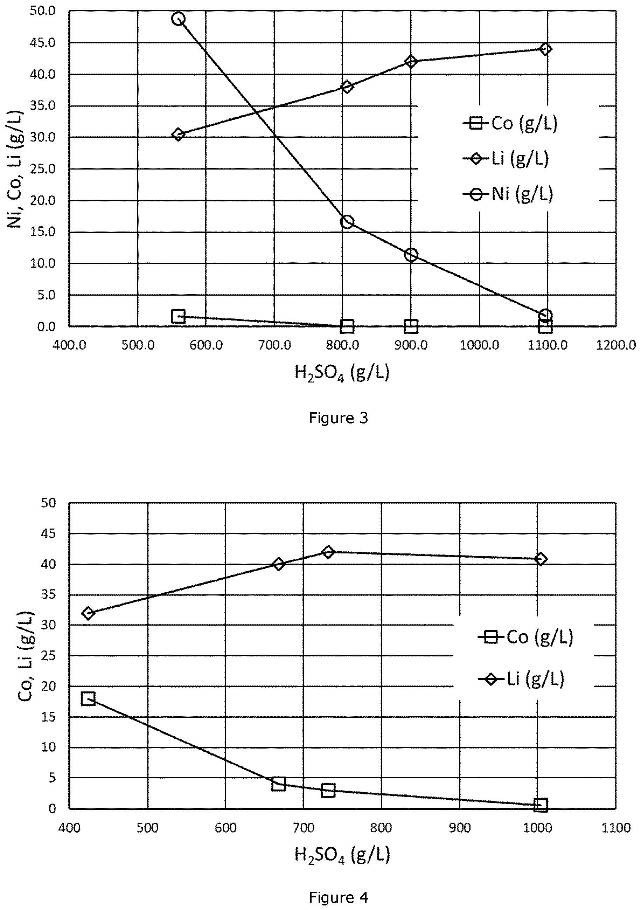

These solutions are treated similarly to those of Example 1. However, a temperature of 80 °C was selected instead of 90 °C. The results are presented in Figures 3 and 4.

These results confirm that the presence of Ni promotes the crystallization of Co. Almost double the amount of Co is still present in the crystallization effluent when no NiSO₄ is present in the system.

The selective separation process is further illustrated in Examples 4 to 7.

### Example 4: Process starting from a Ni-Li solution

1 L of solution containing 110 g/L Ni, 11.4 g/L Li as sulfates and 250 g/L H₂SO₄, is added to a 2 L beaker. The solution is agitated and heated to a temperature of 95 °C. Water is evaporated until a total slurry volume of 500 mL is obtained. The evaporation is performed in 3 hours at atmospheric pressure.

The slurry is filtered on a pre-heated Büchner funnel. 300 mL of filtrate containing 11.8 g/L Ni and 32 g/L Li is recovered. The H₂SO₄ concentration of the final filtrate is determined by titration as 710 g/L H₂SO₄. The residue is washed with 430 mL of water. In industrial practice, the wash water is recycled and not considered as a loss. In this and following examples, the contents of the wash waters is therefore added to the yields. 392 g of crystals are obtained containing 25% Ni and only 0.3% Li. The residue further contains sulfates and hydration water. After washing, the residue is dried at 50°C for 24 hours to remove all the impregnated water. After drying in a vacuum furnace, the weight loss of drying at 250 °C under N₂ atmosphere for 1 hour is 26%. This weight loss corresponds to the removal of H₂O when the nickel sulfate salt is converted to monohydrated salt. 26% of weight loss corresponds to 3.4 mol of H₂O per mol of Ni. Hence, the crystallized nickel sulfate salt has a mean hydration factor x of 4.4, a value that is markedly below the usual hydration factor of 6.

**Table 5: Material balance of the separation process starting from a Ni-Li solution**

| | Input | Filtrate | Residue | Wash water |
|---|---|---|---|---|
| | g | g | g | g |
| Ni | 110 | 3.4 | 97.5 | 9.1 |
| Li | 11.4 | 9.2 | 0.5 | 1.7 |

This experiment shows that a high direct NiSO₄ crystallization yield is obtained: 89% of the Ni is crystallized. The Ni yield can be further increased by recycling the wash water back to the crystallization process. There is only a minor contamination of Li in the crystals. Li is recovered via the effluent (sum of filtrate and wash water) with a yield of 95%.

### Example 5: Process starting form an NMC-Li solution

1 L of solution containing 68 g/L Ni, 23 g/L Mn, 24 g/L Co, 14 g/L Li, 11 g/L Na, and 10 g/L Al as sulfates is added to a 2 L beaker.

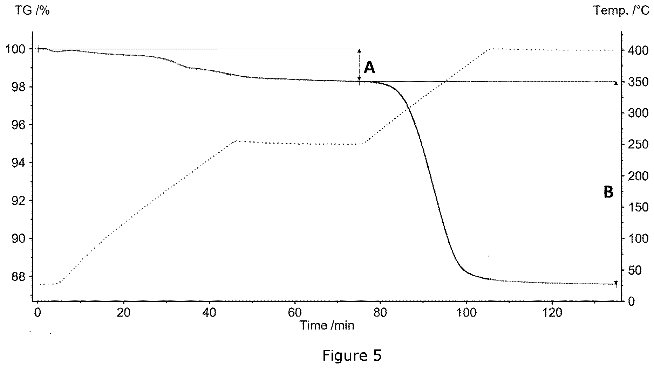

The solution is agitated while 400 mL of concentrated H₂SO₄ with a concentration of 1740 g/L is added. The mixture is heated to 95 °C on a heating plate. Water is evaporated until a total slurry volume of 950 mL is obtained. The slurry is filtered on a heated Büchner funnel. 810 mL of filtrate is recovered containing 6.2 g/L Ni, 0.02 g/L Mn, 0.01 g/L Co, 16 g/L Li, 13 g/L Na, and 11 g/L Al. The H₂SO₄ concentration as determined by titration is 830 g/L. The residue is washed with 670 mL of water. 320 g of dry residue is obtained containing 18.8% Ni, 7% Mn, 7.1% Co, 0.2% Li, and 0.01% Na. The residue further contains sulfate, hydration water, and trace impurities. After washing, the residue is dried at 50°C for 24 hours to remove all the impregnated water. After drying, thermogravimetric analysis (TGA) under N₂ is performed on the dried crystals. The results of this TGA are presented in Figure 5. The weight loss of drying at 250 °C under N₂ atmosphere during the TGA (step A in Figure 5) is 2.6%. This corresponds to a weight loss of 0.3 mole of H₂O per mole of the sum of Ni and Co, which corresponds to a mean hydration factor x of 1.3. MnSO₄ is assumed to be present as its monohydrate salt after crystallization, and will not further dehydrate at 250 °C. After the dehydration at 250 °C, the salt is further heated to 400 °C in order to remove all hydration waters (x=0). A weight loss of 10% is measured by heating from 250 °C to 400 °C. (step B in Figure 5). This weight loss confirms that Ni, Co and Mn were present as monohydrated sulfate salts at 250 °C (x=1).

**Table 6: Material balance of the separation process starting from an NMC-Li solution**

| | Input | Filtrate | Residue | Wash water |
|---|---|---|---|---|
| | g | g | g | g |
| Ni | 67.9 | 5.0 | 59.6 | 3.3 |
| Co | 23.94 | 0.0 | 22.7 | 1.2 |
| Mn | 22.96 | 0.0 | 21.8 | 1.1 |
| Li | 14.0 | 12.9 | 0.5 | 0.6 |
| Al | 10.0 | 8.9 | 0.7 | 0.4 |
| Na | 11.06 | 10.6 | 0.1 | 0.4 |

This example illustrates the high recovery yields for Ni, Mn and Co in the crystals. A high NMC crystallization yield, i.e. 91%, with only 0.2% Li contamination in the crystals is achieved. Li is recovered via the effluent (sum of filtrate and wash water) with a recovery yield of 96%. The major part of impurities such Na and Al remain in solution. The Ni, Mn and Co yield can be further increased by recycling the wash water back to the crystallization process.

### Example 6: Process starting from NMC-Li solids

300 g of NMC cathode powder with a composition of 25% Ni, 15% Mn, 15% Co, and 5.2% Li, is mixed with 200 mL of water and added in a 2 L beaker. The beaker is placed on a heating plate and agitated to keep the cathode powder in suspension. 1 L of concentrated H2SO4 with a concentration of 1740 g/L is added while the temperature is raised to 95 °C. 775 mL of a 30% H₂O₂ solution is added to the mixture as reducing agent over a period of 9½ h to ensure that Ni, Mn, and Co are bivalent. The mixture is filtered on a heated Büchner funnel. 1.6 L of filtrate is recovered. The filtrate comprises 3.8 g/L Ni, 6.5 g/L Mn, 2.2 g/L Co, and 8.4 g/L Li. The H₂SO₄ concentration is determined by titration as 775 g/L.

The residue is washed with 850 mL of water. 567 g of dry residue is obtained containing 12% Ni, 6.3% Mn, 7.4% Co, and 0.3% Li. The residue further contains sulfate, and hydration water.

**Table 7: Material balance of the separation process starting from NMC-Li solids**

| | Input | Filtrate | Residue | Wash water |
|---|---|---|---|---|
| | g | g | g | g |
| Ni | 75 | 5.9 | 67.3 | 1.8 |
| Co | 45 | 3.4 | 40.5 | 1.1 |
| Mn | 45 | 10.1 | 33.5 | 1.4 |
| Li | 15.6 | 13.1 | 1.5 | 1.0 |

This example shows an in-situ reaction of a Ni- and Li-containing solids treated at high acidity. The Ni oxide in the solid material is transformed into sulfate, while the majority of the Li dissolves. Mn and Co behave similarly to Ni. A total yield of 83% for Ni, Mn and Co is achieved. The Ni, Mn and Co yield can be further increased by recycling the wash water back to the crystallization process. 90% of the Li is recovered in the effluent (sum of filtrate and wash water).

## Claims

1. Process for the selective recovery of transition metals M comprising Ni from starting materials in aqueous solution, said solution also containing Li, comprising the steps of:
- crystallizing Ni by conditioning the solution to reach an acidity A, expressed in g/L of sulfuric acid, at a temperature T, expressed in degrees Celsius, according to the formula A ≥ 1100 - 6.7 * T, with T between 45 °C and the boiling point of the solution, thereby obtaining a mixture of solid and liquid reaction products; and,
- solid/liquid separation of the reaction products, thereby obtaining a solid residue comprising the major part of the Ni entering the process, as a hydrated nickel sulfate, and an effluent solution comprising the major part of the Li entering the process.

2. Process for the selective recovery of transition metals M comprising Ni from starting materials in solid form, said solids also containing Li, comprising the steps of:
- crystallizing Ni by contacting the solids with an aqueous media conditioned to reach an acidity A, expressed in g/L of sulfuric acid, at a temperature T, expressed in degrees Celsius, according to the formula A ≥ 1100 - 6.7 * T, with T between 45 °C and the boiling point of the aqueous media, thereby obtaining a mixture of solid and liquid reaction products; and,
- solid/liquid separation of the reaction products, thereby obtaining a solid residue comprising the major part of the Ni entering the process, as a hydrated nickel sulfate, and an effluent solution comprising the major part of the Li entering the process.

3. Process according to claims 1 or 2, wherein the acidity A of the solution, expressed in g/L of sulfuric acid, and the temperature T of the solution, expressed in degrees Celsius, are chosen according to the formula A ≥ 1250 - 6.7 * T, with T between 50 °C and the boiling point of the solution or aqueous media.

4. Process according to any one of claims 1 to 3, wherein said major part of the Li is at least 80%, preferably at least 90%, by weight of the Li entering the process.

5. Process according to any one of claims 1 to 4, wherein said major part of the Ni is at least 60%, preferably at least 80%, by weight of the Ni entering the process.

6. Process according to any one of claims 1 to 5, wherein the solid residue obtained in the step of solid/liquid separation comprises hydrated sulfates according to the formula NiSO₄.xH₂O, wherein x is the mean hydration factor, with x < 5, preferably with x < 2.

7. Process according to any one of claims 1 to 6, wherein the starting materials have a Ni:Li weight ratio of at least 0.15.

8. Process according to any one of claims 1 to 7, wherein the starting materials further comprise Co.

9. Process according to claim 8, wherein the Ni:Co molar ratio is at least 1.

10. Process according to claim 9, wherein the total of Ni and Co forms the major part of said transition metals M.

11. Process according to any one of claims 1 to 10, wherein the starting materials further comprise Mn.

12. Process according to any one of claims 1 to 11, wherein the starting materials originate from rechargeable batteries, in particular from lithium-ion batteries.

13. Process according to any one of claims 1 to 12, wherein Ni forms the major part of said transition metals M.

## Patentansprüche

1. Verfahren zur selektiven Rückgewinnung von Übergangsmetallen M, die Ni umfassen, aus Ausgangsstoffen in wässriger Lösung, wobei die Lösung außerdem Li enthält, umfassend die Schritte:
- Kristallisieren von Ni durch Konditionieren der Lösung, um einen Säuregrad A, ausgedrückt in g/l Schwefelsäure, bei einer Temperatur T, ausgedrückt in Grad Celsius, entsprechend der Formel A ≥ 1100 - 6,7 * T zu erreichen, wobei T zwischen 45 °C und dem Siedepunkt der Lösung liegt, wodurch ein Gemisch aus festen und flüssigen Reaktionsprodukten erhalten wird; und
- Fest-/Flüssig-Trennung der Reaktionsprodukte, wodurch ein fester Rückstand, der den Hauptanteil des in das Verfahren eingehenden Ni als hydratisiertes Nickelsulfat umfasst, und eine abfließende Lösung, die den Hauptanteil des in das Verfahren eingehenden Li enthält, erhalten werden.

2. Verfahren zur selektiven Rückgewinnung von Übergangsmetallen M, die Ni umfassen, aus Ausgangsstoffen in fester Form, wobei die Feststoffe außerdem Li enthalten, umfassend die Schritte:
- Kristallisieren von Ni durch Inkontaktbringen der Feststoffe mit einem wässrigen Medium, das so konditioniert ist, dass es einen Säuregrad A, ausgedrückt in g/l Schwefelsäure, bei einer Temperatur T, ausgedrückt in Grad Celsius, entsprechend der Formel A ≥ 1100 - 6,7 * T erreicht, wobei T zwischen 45 °C und dem Siedepunkt des wässrigen Mediums liegt, wodurch ein Gemisch aus festen und flüssigen Reaktionsprodukten erhalten wird; und
- Fest-/Flüssig-Trennung der Reaktionsprodukte, wodurch ein fester Rückstand, der den Hauptanteil des in das Verfahren eingehenden Ni als hydratisiertes Nickelsulfat umfasst, und eine abfließende Lösung, die den Hauptanteil des in das Verfahren eingehenden Li enthält, erhalten werden.

3. Verfahren nach Anspruch 1 oder 2, wobei der Säuregrad A der Lösung, ausgedrückt in g/l Schwefelsäure, und die Temperatur T der Lösung, ausgedrückt in Grad Celsius, entsprechend der Formel A ≥ 1250 - 6,7 * T gewählt werden, wobei T zwischen 50 °C und dem Siedepunkt der Lösung oder des wässrigen Mediums liegt.

4. Verfahren nach einem der Ansprüche 1 bis 3, wobei der Hauptanteil des Li mindestens 80 %, vorzugsweise mindestens 90 %, des Gewichts des in das Verfahren eingehenden Li beträgt.

5. Verfahren nach einem der Ansprüche 1 bis 4, wobei der Hauptanteil des Ni mindestens 60 %, vorzugsweise mindestens 80 %, des Gewichts des in das Verfahren eingehenden Ni beträgt.

6. Verfahren nach einem der Ansprüche 1 bis 5, wobei der im Schritt der Fest-/Flüssig-Trennung erhaltene feste Rückstand hydratisierte Sulfate entsprechend der Formel NiSO₄.xH₂O umfasst, wobei x der mittlere Hydratisierungsfaktor ist, mit x < 5, vorzugsweise mit x < 2.

7. Verfahren nach einem der Ansprüche 1 bis 6, wobei die Ausgangsstoffe ein Ni:Li-Gewichtsverhältnis von mindestens 0,15 aufweisen.

8. Verfahren nach einem der Ansprüche 1 bis 7, wobei die Ausgangsstoffe ferner Co umfassen.

9. Verfahren nach Anspruch 8, wobei das Ni:Co-Molverhältnis mindestens 1 beträgt.

10. Verfahren nach Anspruch 9, wobei die Gesamtheit von Ni und Co den Hauptanteil der Übergangsmetalle M bildet.

11. Verfahren nach einem der Ansprüche 1 bis 10, wobei die Ausgangsstoffe ferner Mn umfassen.

12. Verfahren nach einem der Ansprüche 1 bis 11, wobei die Ausgangsstoffe aus wiederaufladbaren Batterien, insbesondere aus Lithium-Ionen-Batterien, stammen.

13. Verfahren nach einem der Ansprüche 1 bis 12, wobei Ni den Hauptanteil der Übergangsmetalle M bildet.

## Revendications

1. Procédé de récupération sélective de métaux de transition M comprenant Ni à partir de matériaux de départ en solution aqueuse, ladite solution contenant également Li, comprenant les étapes consistant à :
- cristalliser Ni par conditionnement de la solution pour atteindre une acidité A, exprimée en g/L d'acide sulfurique, à une température T, exprimée en degrés Celsius, selon la formule A ≥ 1100 - 6,7 * T, T étant comprise entre 45 °C et le point d'ébullition de la solution, permettant ainsi d'obtenir un mélange de produits de réaction solides et liquides ; et,
- effectuer une séparation solide/liquide des produits de réaction, permettant ainsi d'obtenir un résidu solide comprenant la majeure partie du Ni entrant dans le procédé, sous forme de sulfate de nickel hydraté, et une solution d'effluent comprenant la majeure partie du Li entrant dans le procédé.

2. Procédé de récupération sélective de métaux de transition M comprenant Ni à partir de matériaux de départ sous forme solide, lesdits solides contenant également Li, comprenant les étapes consistant à :
- cristalliser Ni par mise en contact des solides avec un milieu aqueux conditionné pour atteindre une acidité A, exprimée en g/L d'acide sulfurique, à une température T, exprimée en degrés Celsius, selon la formule A ≥ 1100 - 6,7 * T, T étant comprise entre 45 °C et le point d'ébullition du milieu aqueux, permettant ainsi d'obtenir un mélange de produits de réaction solides et liquides ; et,
- effectuer une séparation solide/liquide des produits de réaction, permettant ainsi d'obtenir un résidu solide comprenant la majeure partie du Ni entrant dans le procédé, sous forme de sulfate de nickel hydraté, et une solution d'effluent comprenant la majeure partie du Li entrant dans le procédé.

3. Procédé selon les revendications 1 ou 2, dans lequel l'acidité A de la solution, exprimée en g/L d'acide sulfurique, et la température T de la solution, exprimée en degrés Celsius, sont choisies selon la formule A ≥ 1250 - 6,7 * T, T étant comprise entre 50 °C et le point d'ébullition de la solution ou du milieu aqueux.

4. Procédé selon l'une quelconque des revendications 1 à 3, dans lequel ladite majeure partie du Li est d'au moins 80 %, de préférence au moins 90 %, en poids du Li entrant dans le procédé.

5. Procédé selon l'une quelconque des revendications 1 à 4, dans lequel ladite majeure partie du Ni est d'au moins 60 %, de préférence au moins 80 %, en poids du Ni entrant dans le procédé.

6. Procédé selon l'une quelconque des revendications 1 à 5, dans lequel le résidu solide obtenu à l'étape de séparation solide/liquide comprend des sulfates hydratés selon la formule NiSO₄.xH₂O, dans lequel x est le facteur d'hydratation moyen, avec x < 5, de préférence avec x < 2.

7. Procédé selon l'une quelconque des revendications 1 à 6, dans lequel les matériaux de départ ont un rapport en poids Ni:Li d'au moins 0,15.

8. Procédé selon l'une quelconque des revendications 1 à 7, dans lequel les matériaux de départ comprennent en outre Co.

9. Procédé selon la revendication 8, dans lequel le rapport molaire Ni:Co est d'au moins 1.

10. Procédé selon la revendication 9, dans lequel le total de Ni et Co forme la majeure partie desdits métaux de transition M.

11. Procédé selon l'une quelconque des revendications 1 à 10, dans lequel les matériaux de départ comprennent en outre Mn.

12. Procédé selon l'une quelconque des revendications 1 à 11, dans lequel les matériaux de départ proviennent de batteries rechargeables, en particulier de batteries lithium-ion.

13. Procédé selon l'une quelconque des revendications 1 à 12, dans lequel Ni forme la majeure partie desdits métaux de transition M.
